# EUROPEAN PATENT SPECIFICATION

(11) **EP 1 782 690 B1**
(45) Date of publication and mention of the grant of the patent: **12.09.2012**
(21) Application number: 06020262.9
(22) Date of filing: 27.09.2006
(51) Int. Cl.: A01N 43/54, A01N 37/06, A01P 3/00

(54) **Method of controlling diseases on barley plants**
Verfahren zur Bekämpfung von Krankheiten der Gerste
Procédé pour lutter contre des maladies de l'orge

(30) Priority: 29.09.2005 EP 05021238
(43) Date of publication of application: 09.05.2007
(73) Proprietor: Syngenta Participations AG, 4058 Basel (CH); Syngenta Limited, Guildford Surrey GU2 7YH (GB)
(72) Inventor: Forster, Birgit, c/o Syngenta Crop. Prot. AG, 4058 Basel (CH); Stock, David, c/o Syngenta limited, Bracknell, Berkshire RG42 6EY (GB)
(74) Representative: Hölscher, Ingo

(56) References cited:
- EP-A1- 0 310 550
- WO-A1-97/41727
- WO-A1-03/086073
- US-A- 5 366 995
- KOVALENKO I V ET AL: "Article: Measurement of Soybean Fatty Acids by Near-Infrared Spectroscopy: Linear and Nonlinear Calibration Methods", JOURNAL OF THE AMERICAN OIL CHEMISTS' SOCIETY, SPRINGER, BERLIN, DE, vol. 83, no. 5, 1 May 2006 (2006-05-01), pages 421-427, XP002534287, ISSN: 0003-021X, DOI: DOI:10.1007/S11746-006-1221-Z

## Description

The present invention relates to a method of controlling diseases on barley plants caused by phytopathogens.

Methods of controlling diseases on barley plants are known. For example, EP-0-310-550 describes the application of the microbiocidally active compound cyprodinil to barley plants. To control the barley disease Rhynchosporium, typically 500-750 g cyprodinil/ha are used. A commonly used product is a water dispersible granules-formulation (WG-formulation) called "Unix"®-formulation, which is sold by Syngenta AG. In view of ecological and customer safety reasons it is desirable to reduce the amount of cyprodinil applied in such methods, while maintaining the level of disease control.

One approach to solve this problem is to improve the agrochemical performance of cyprodinil in barley plants via co-application of a second chemical agent, a so-called "additive". Such an approach is described in WO 79/00838 for the performance of a plant growth-regulator in barley. WO 79/00838 describes the enhancement of the action of chlormequat in barley plants by addition of an additive mixture comprising glycerol, nicotindamide, pyridoxine and yeast extract. A transfer of this teaching to the cyprodinil application requires significant resources to identify a suitable additive able to enhance the agrochemical performance of cyprodinil in barley plants.

A further approach to reduce the amount of cyprodinil is to co-apply a second microbiocidally active compound. An example of such an approach is the co-application of prochloraz as described in EP-0-627-164. The use of such a method can significantly reduce the amount of cyprodinil used for agrochemical applications. However, for such methods a second pesticidal agent is required, which not only increases the application costs, but also raises ecological and/or customer safety concerns.

There is therefore proposed in accordance with the present invention a method of controlling diseases on barley plants caused by phytopathogens, which comprises applying to the barley plants or to the locus of the barley plants a combination of cyprodinil and an unsaturated C₁₈-fatty acid selected from oleic acid, linoleic acid and linolenic acid, wherein the weight ratio of cyprodinil to the unsaturated C₁₈-fatty acid is from 100 : 1 to 1: 100.

It has now been found, surprisingly, that the combination according to the invention lowers the rate of application of cyprodinil whilst the action remains equally good. Secondly, the combination still achieves sufficient phytopathogen control even where the control by cyprodinil alone would be not sufficient for agricultural uses in such a low application rate range. Out of this reason a substantial reduction of cyprodinil-use per hectar barley plants is possbile by using the method according to the invention.

In comparison to a second pesticide, unsaturated C₁₈-fatty acids raise much less ecological and/or customer safety concerns.

However, besides the action with respect to fungicidal activity, the combinations according to the invention can also have further surprising advantageous properties. Examples of such advantageous properties that may be mentioned are: advantageous behaviour during formulation and/or upon application, such as tank-mixing with other products; increased storage stability; more advantageuos degradability; or improved characteristics of the useful plants including: crop yields, less dead basal leaves, stronger tillers, greener leaf color, less fertilizers nedded, less seeds needed, less plant verse (lodging), and improved plant vigor.

According to the instant invention Cyprodinil can be used to prepare the combinations of the invention either in the free form or as a salt or metal complex thereof.

Of the acids that can be used for the preparation of salts of cyprodinil, the following may be mentioned: hydrohalic acids, such as hydrofluoric acid, hydrochloric acid, hydrobromic acid or hydriodic acid; sulfuric acid, phosphoric acid, nitric acid, and organic acids, such as acetic acid, trifluoroacetic acid, trichloroacetic acid, propionic acid, glycolic acid, thiocyanic acid, lactic acid, succinic acid, citric acid, benzoic acid, cinnamic acid, oxalic acid, formic acid, benzenesulfonic acid, p-toluenesulfonic acid, methanesulfonic acid, salicylic acid, p-aminosalicylic acid, 2-phenoxybenzoic acid, 2-acetoxybenzoic acid and 1,2-naphthalene-disulfonic acid.

Metal complexes consist of the underlying organic molecule and an inorganic or organic metal salt, for example a halide, nitrate, sulfate, phosphate, acetate, trifluoroacetate, trichloroacetate, propionate, tartrate, sulfonate, salicylate, benzoate, etc., of an element of main group II, such as calcium and magnesium, and of main groups III and IV, such as aluminium, tin or lead, and of subgroups I to VIII, such as chromium, manganese, iron, cobalt, nickel, copper, zinc, etc.. Preference is given to the subgroup elements of the 4th period. The metals may have any of the different valencies in which they occur. The metal complexes can be mono- or poly-nuclear, i.e. they can contain one or more organic molecule components as ligands.

In one embodiment of the invention, cyprodinil is used in the free form to prepare the combinations of the invention.

The term "C₁₈-fatty acid" according to the invention means a fatty acid with 18 carbon atoms. An example for an unsaturated C₁₈-fatty acid is oleic acid.

Preferably, in the method according to the invention a combination of cyprodinil and oleic acid is used. An advantage of this embodiment of the invention is that oleic acid is less expensive than linoleic acid or linolenic acid.

Throughout this document the expression "combination" stands for the various combinations of cyprodinil and the unsaturated C₁₈-fatty acid, for example in a single "ready-mix" form, in a combined spray mixture composed from separate formulations of the single active ingredient components, such as a "tank-mix", and in a combined use of the single active ingredients when applied in a sequential manner, i.e. one after the other with a reasonably short period, such as a few hours or days. The order of applying cyprodinil and the unsaturated C₁₈-fatty acid is not essential for working the present invention.

Preferably the expression combination stands for a single "ready-mix" form of cyprodinil and the unsaturated C₁₈-fatty acid.

The combination is effective against harmful microorganisms, such as microorganisms, that cause diseases, in particular against phytopathogenic fungi and bacteria.

The combination is effective especially against phytopathogenic fungi belonging to the following classes: Ascomycetes (e.g. Venturia, Podosphaera, Erysiphe, Monilinia, Mycosphaerella, Uncinula); Basidiomycetes (e.g. the genus Hemileia, Rhizoctonia, Phakopsora, Puccinia, Ustilago, Tilletia); Fungi imperfecti (also known as Deuteromycetes; e.g. Botrytis, Helminthosporium, Rhynchosporium, Fusarium, Septoria, Cercospora, Alternaria, Pyricularia and Pseudocercosporella herpotrichoides).

According to the invention "barley plants" typically comprise the following varieties of barley plants: Esterel, Plasiant, Optic, Rattle, Vanessa and Franziska. This list does not represent any limitation.

The term "barley plant" is to be understood as including also barley plants that have been rendered tolerant to herbicides like bromoxynil or classes of herbicides (such as, for example, HPPD inhibitors, ALS inhibitors, for example primisulfuron, prosulfuron and trifloxysulfuron, EPSPS (5-enol-pyrovyl-shikimate-3-phosphate-synthase) inhibitors, GS (glutamine synthetase) inhibitors) as a result of conventional methods of breeding or genetic engineering. To give a general example of a crop that has been rendered tolerant to imidazolinones, e.g. imazamox, by conventional methods of breeding (mutagenesis) is Clearfield® summer rape (Canola). Examples of crops that have been rendered tolerant to herbicides or classes of herbicides by genetic engineering methods include glyphosate- and glufosinate-resistant maize varieties commercially available under the trade names RoundupReady® and LibertyLink®.

The term "barley plants" is to be understood as including also barley plants which have been so transformed by the use of recombinant DNA techniques that they are capable of synthesising one or more selectively acting toxins, such as are known, for example, from toxin-producing bacteria, especially those of the genus Bacillus. Toxins that can be expressed by such transgenic plants include, for example, insecticidal proteins, for example insecticidal proteins from Bacillus cereus or Bacillus popliae; or insecticidal proteins from Bacillus thuringiensis, such as δ-endotoxins, e.g. CryIA(b), CrylA(c), CryIF, CryIF(a2), CryIIA(b), CryIIIA, CryIIIB(b1) or Cry9c, or vegetative insecticidal proteins (VIP), e.g. VIP1, VIP2, VIP3 or VIP3A.

The term "barley plants" is to be understood as including also barley plants which have been so transformed by the use of recombinant DNA techniques that they are capable of synthesising antipathogenic substances having a selective action, such as, for example, the so-called "pathogenesis-related proteins" (PRPs, see e.g. EP-A-0 392 225). Examples of such antipathogenic substances and transgenic plants capable of synthesising such antipathogenic substances are known, for example, from EP-A-0 392 225, WO 95/33818, and EP-A-0 353 191. The methods of producing such transgenic plants are generally known to the person skilled in the art and are described, for example, in the publications mentioned above. Antipathogenic substances which can be expressed by such transgenic plants include, for example, ion channel blockers, such as blockers for sodium and calcium channels, for example the viral KP1, KP4 or KP6 toxins; stilbene synthases; bibenzyl synthases; chitinases; glucanases; the so-called "pathogenesis-related proteins" (PRPs; see e.g. EP-A-0 392 225); antipathogenic substances produced by microorganisms, for example peptide antibiotics or heterocyclic antibiotics (see e.g. WO 95/33818) or protein or polypeptide factors involved in plant pathogen defence (so-called "plant disease resistance genes", as described in WO 03/000906).

The term "locus" of a barley plant as used herein is intended to embrace the place on which the barley plants are growing, where the seeds of the barley plants are sown or where the seeds of the barley plants will be sown. An example for such a locus is a field, on which barley plants are growing.

The combination according to the present invention are particularly effective against Pyrenophora Teres, Rhynchosporium Secalis, Erysiphe Graminis and Puccinia Hordei.

The amount of a combination of the invention to be applied, will depend on various factors, such as the subject of the treatment, such as, for example barley plants or soil; the purpose of the treatment, such as, for example prophylactic or therapeutic; the type of fungi to be controlled or the application time.

The weight ratio of the unsaturated C₁₈-fatty acid to cyprodinil is from 1 : 100 to 100 : 1. Preferably, the weight ratio of the unsaturated C₁₈-fatty acid to cyprodinil is from 1 : 10 to 10 : 1.
Preferably, the weight ratio of the unsaturated C₁₈-fatty acid to cyprodinil is from 20 : 80 to 80 : 20.
Further preferably, the weight ratio of the unsaturated C₁₈-fatty acid to cyprodinil is from 40 : 60 to 60 : 40.
Further preferably, the weight ratio of the unsaturated C₁₈-fatty acid to cyprodinil is about 44 : 56.

The method of the invention comprises applying to the barley plants or to the locus of the barley plants in admixture or separately, a fungicidally effective aggregate amount of cyprodinil and the unsaturated C₁₈-fatty acid.
Preferably, the method of the invention comprises applying to the barley plants or to the locus of the barley plants in admixture a fungicidally effective aggregate amount of cyprodinil and the unsaturated C₁₈-fatty acid.

The combinations according to the invention are applied to the barley plants or to the locus of the barley plants at least once between Growth Stage 28 and 65.

The meaning of the term "Growth Stage" according to the invention is described in:
"Compendium of Growth Stage Identification Keys for Mono- and Dicotyledonous Plants"; Second Edition, 1997 (ISBN 3-9520749-3-4).

The combinations according to the invention are preferably applied to the barley plants or to the locus of the barley plants two times, once between Growth Stage 28 and 37, preferably between Growth Stage 29 and 32, and a second time between Growth Stage 38 and 65, preferably between Growth Stage 39 and 59.

Preferably, the barley crops are harvested at Growth Stage 89.

With the combination according to the invention it is possible to inhibit or destroy the phytopathogenic microorganisms which occur in barley plants or in parts of barley plants (fruit, leaves, stems, tubers, roots) in different parts of the barley plants, while at the same time the parts of barley plants which grow later are also protected from attack by phytopathogenic microorganisms.

The combinations according to the invention are applied by treating the fungi, the barley plants or the locus thereof with a fungicidally effective aggregate amount of cyprodinil and the unsaturated C₁₈-fatty acid.

The combination according to the invention may be applied before ("preventive treatment") or after infection ("curative treatment") of the barley plants by the fungi.

When applied to the barley plants cyprodinil is typically applied at a rate of 10 to 2000 g cyprodinil/ha, particularly 10 to 1000 g cyprodinil/ha, most preferably 10 to 450 g cyprodinil/ha, e.g. 100, 300, 375 or 450 g cyprodinil/ha, in combination with 10 to 2000 g of the unsaturated C₁₈-fatty acid /ha, particularly 10 to 1000 g of the unsaturated C₁₈-fatty acid/ha, most preferably 10 to 450 g of the unsaturated C₁₈-fatty acid/ha, e.g. 100, 300, 375 or 450 g of the unsaturated C₁₈-fatty acid/ha.

In agricultural practice the application rates of the combination according to the invention depend on the type of effect desired, and typically range from 20 to 4000 g of total combination per hectare, preferably from 20 to 2000 g of total combination per hectare, most preferably from 20 to 900 g of total combination per hectare.

The combination according to the invention is preferably employed in the form of a composition.

Said compositions may comprise one or more further agrochemical active ingredients, such as herbicides, fungicides, insecticides, nematocides or plant-growth regulators.

In one embodiment, the composition according to the invention comprises furthermore at least one fungicide selected from Azoxystrobin, Boscalid, Chlorothalonil, Cyflufenamid, Cyproconazole, Dimoxystrobin, Epoxiconazole, Fenpropidin, Fenpropimorph, Flusilazol, Fluoxastrobin, Ipconazole, Metconazole, Metrafenone, Penconazole, Penthiopyrad, Picoxystrobin, Prochloraz, Propiconazole, Proquinazid, Prothioconazole, Pyraclostrobin, Pyribencarb, Quinoxyfen, Spiroxamine, Tebuconazole, Trifloxystrobin, a compound of formula A-1 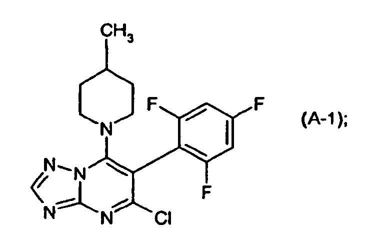 a compound of formula A-2 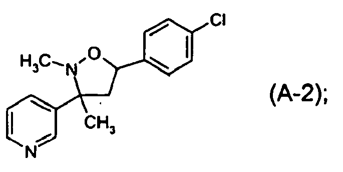 and a compound of formula A-3 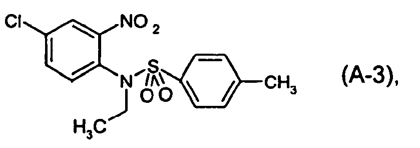 a compound of formula A-4 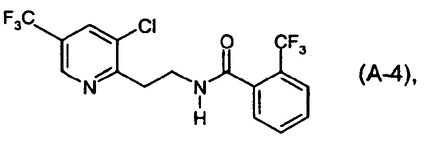 a compound of formula A-5 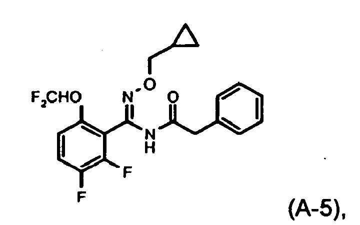 a compound of formula A-6 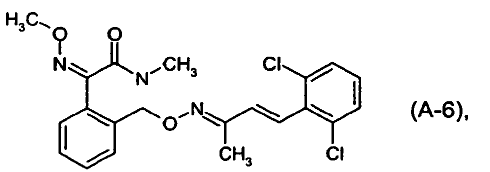 a compound of formula A-7 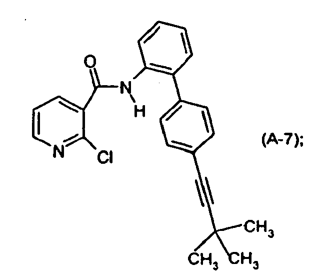 a compound of formula A-8 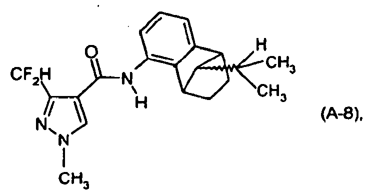 which represents an epimeric mixture of the racemic syn and anti compounds, wherein the ratio of racemic syn compounds to racemic anti compounds is from 1000 : 1 to 1 : 1000; a compound of formula A-9 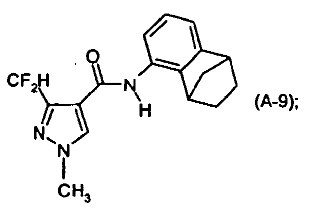 a compound of formula A-10 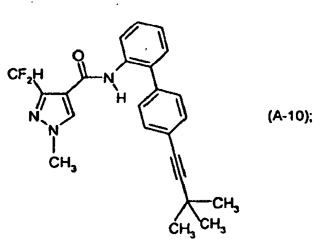 a compound of formula A-11 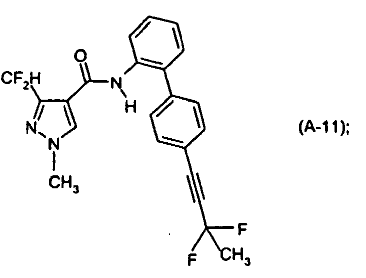 a compound of formula A-12 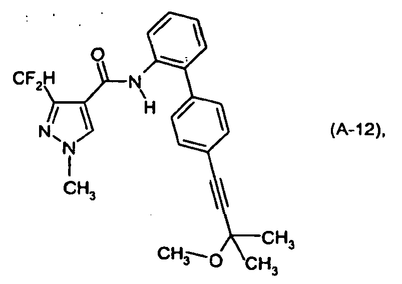 and a compound of formula A-13

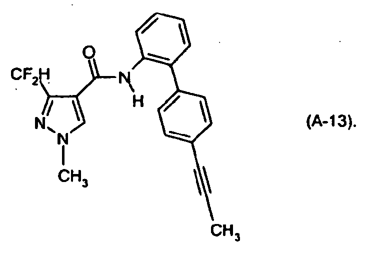

The compound of formula A-1 is described in WO 98/46607 and is registered under CAS-214706-53-3; the compound of formula A-2 is described in EP-1-035-122 and is registered under CAS-291771-99-8 and CAS-291771-83-0; the compound of formula A-3 is described in WO 00/065913 and is registered under CAS-304911-98-6; the compound of formula A-4 is described in WO 04/016088; the compound of formula A-5 is described in WO 99/14187 and registered under CAS: 221201-92-9; the compound of formula A-6 is registered under CAS: 366815-39-6; and the compounds of formula A-7, A-8, A-9, A-10, A-11, A-12 and A-13 are all described in WO 04/058723, WO 04/035589 and WO 06/037632.

Said composition according to the invention may be employed in any conventional form, for example in the form of a twin pack, an emulsion concentrate (EC), a suspo-emulsion (SE), a water-in-oil-emulsion (EO), an oil-in-water-emulsion (EW), a micro-emulsion (ME) or any technically feasible formulation in combination with agriculturally acceptable adjuvants. In the case that the composition according to the invention is a suspo-emulsion, cyprodinil is dissolved in the liquid phase and one or more further agrochemical active ingredients are in suspended form.

Said compositions according to the invention may be produced in conventional manner, e.g. by mixing cyprodinil and the unsaturated C₁₈-fatty acid with at least one appropriate formulation adjuvant.

The term "formulation adjuvant" according to the invention denotes a natural or synthetic, organic or inorganic material with which cyprodinil is combined in order to facilitate its application to the barley plants or to the soil. This adjuvant is hence generally inert, and it must be agriculturally acceptable, in particular to barley plants.

The formulation adjuvant can be a carrier or a surfactant. In compositions according to the invention more than one adjuvant can be present, in such embodiments more than one carrier and/or more than one surfactant can be present, a non-limiting example would be one carrier and two surfactans.

The "carrier" can be a liquid carrier (water, alcohols, ketones, petroleum fractions, aromatic or paraffinic hydrocarbons, chlorinated hydrocarbons, liquefied gases, and the like) or a solid carrier.

Suitable liquid carriers are, but are not restricted to: aromatic hydrocarbons, in particular the fractions C₈ to C₁₂, such as xylene mixtures or substituted naphthalenes, phthalic esters such as dibutyl or dioctyl phthalate, dipropylene glycol dibenzoate, aliphatic hydrocarbons such as cyclohexane or paraffins, alcohols and glycols as well as their ethers, esters and diesters, such as ethylene glycol monomethyl ether, ketones such as cyclohexanone, strongly polar solvents such as, but not restricted to, N-methyl-2-pyrrolidone, dimethyl sulfoxide or dimethylformamide, and, if appropriate, epoxidized vegetable oils or soybean oil; or water.

Suitable solid carriers are, but are not restricted to: aluminium silicate, urea, sodium sulphate, talc, calcium sulphate or potassium sulphate.

According to the invention a single carrier or a mixture of two or more carriers may be present in the composition according to the invention.

Preferred carriers are liquid carriers.

Preferred carriers are di-propyleneglycol dibenzoate, benzyl benzoate, acetophenone, benzyl acetate, decanol, n-octyl pyrrolidone, dodecane, glycerol triacetate, methyl benzoate, octanol, methyl oleate ("Agnique ME 181-G"®) and 2-ethylhexyl benzoate ("Prifer 6813"®).

"Surfactants" are non-ionic, cationic, amphoteric and/or anionic surfactants having good emulsifying, dispersing and wetting properties. According to the invention a single surfactant or a mixture of two or more surfactants may be present. The surfactants customarily employed in formulation technology are described, inter alia, in the following publications:
"McCutcheon's Detergents and Emulsifiers Annual", MC Publishing Corp., Glen Rock, N.J., 1988 and M. and J. Ash, "Encyclopedia of Surfactants", Vol. I-III, Chemical Publishing Co., New York, 1980-1981.

Among the surfactants there may be mentioned, e.g., polyacrylic acid salts, lignosulphonic acid salts, phenolsulphonic or (mono- or di-alkyl)naphthalenesulphonic acid salts, laurylsulfate salts, polycondensates of ethylene oxide with lignosulphonic acid salts, polycondensates of ethylene oxide with fatty alcohols or with fatty acids or with fatty amines, substituted phenols (in particular alkylphenols or arylphenols such as mono- and di-(polyoxyalkylene alkylphenol) phosphates, polyoxyalkylene alkylphenol carboxylates or polyoxyalkylene alkylphenol sulfates), salts of sulphosuccinic acid esters, taurine derivatives (in particular alkyltaurides), polycondensates of ethylene oxide with phosphated tristyrylphenols and polycondensates of ethylene oxide with phosphoric esters of alcohols or phenols.

Preferably at least one surfactant is present in compositions according to the invention to improve the formulation characteristics as cyprodinil, the unsaturated C₁₈-fatty acid and possibly the carrier are not soluble in water and the end-user will apply the compositions according to the invention typically after dilution with water.

Said compositions may comprise one or more formulation additives, such as, but not limited to, biocides, anti-freeze, stickers, thickeners and compounds that provide adjuvancy effects.

In general, the compositions include from 0.01 to 90% by weight of a cyprodinil/ unsaturated C₁₈-fatty acid combination, from 0 to 20% surfactant and from 10 to 99.99% carrier.

Concentrated forms of compositions generally contain in between about 2 and 80%, preferably between about 5 and 70% by weight of a cyprodinil/unsaturated C₁₈-fatty acid combination. Application forms of formulation may for example contain from 0.01 to 20% by weight, preferably from 0.01 to 5% by weight of a cyprodinil/unsaturated C₁₈-fatty acid combination. Whereas commercial products will preferably be formulated as concentrates, the end user will normally employ diluted formulations.

The Examples which follow serve to illustrate the invention.

### Formulation Examples

All percentage values in the following formulation examples are weight per volume values (w/v-values).

### Oil-in-water-emulsion (EW)

| | |
|---|---|
| Cyprodinil | 30 % |
| Oleic Acid | 30 % |
| Butanol/polyoxypropylene/polyoxyethylene-copolymer; "Toximul 8320"® | 2.4 % |
| Modified polyester non-ionic surfactant; "Atlox 4914"® | 2.4 % |
| Propylene glycol | 12 % |
| 1,2-benzisothiazolin-3-one; "Proxel GXL"® | 0.2 % |
| Non-ionic, dimethylpolysiloxane oil based aqueous emulsion; "Rhodorsil Antifoam 426R"® | 0.2 % |
| Water | Rest |

Emulsions of any required dilution, which can be used in plant protection, can be obtained from this concentrate by dilution with water.

### Emulsifiable concentrate (EC)

| | |
|---|---|
| Cyprodinil | 29 % |
| Oleic Acid | 37 % |
| 2-Ethylhexyl-acetate | 22 % |
| castor oil/polyoxyethylene-copolymer (36 mol of ethylene oxide); "Emulsogen EL 360"® | 5 % |
| calcium dodecylbenzenesulfonate; "Atlox 4838B"® | 5 % |
| Tristyrenephenole/polyoxyethylene-copolymer (16 moles ethylene oxide); "Soprophor BSU"® | 2 % |

Emulsions of any required dilution, which can be used in plant protection, can be obtained from this concentrate by dilution with water.

### Formulation Examples

### Example A-1: EW-Formulation:

300 g cyprodinil, technical grade, is mixed with 300 g oleic acid by stirring (if necessary, the mixture can be warmed up to 40°C to facilitate melting of cyprodinil). In another vessel, 24 g of a copolymer of butanol and polyoxypropylene/polyoxyethylene ("Toximul 8320"®), 24 g modified polyester non-ionic surfactant ("Atlox 4914"®), 120 g propylene glycol (technical), 2 g 1,2-benzisothiazolin-3-one ("Proxel GXL"®) and 2 g non-ionic, dimethylpolysiloxane oil based aqueous emulsion ("Rhodorsil Antifoam 426R" ®) was mixed together with water to form an aqueous solution. Then the mixture consisting of cyprodinil and oleic acid is added to the aqueous solution with high shear mixing to form an EW-formulation. The amount of total water used was enough to form 1I of total EW-formulation.

### Example A-2: EC-Formulation

30 g cyprodinil, technical grade, is mixed with 37.6 g oleic acid by stirring (if necessary, the mixture can be warmed up to 40°C to facilitate melting of cyprodinil). 4.8 g of a condensation product of castor oil and ethylene oxide ("Emulsogen EL 360"®), 5.2 g dodecylbenzene sulfonic acid, Ca-salt, linear ("Atlox 4838B"®) and 2 g of a condensation product of tristyrenephenole and 16 moles ethylene oxide (Soprophor BSU"®) are added to the mixture. 2-Ethylhexyl-actetate is added to yield 100 ml of the final EC-formulation.

### Biological Examples

### Example B-1: Control of Rhynchosporium on barley

The following EC-formulations were prepared:

**Table B-1a: EC-formulations**

| Component | A-2A | A-2B |
|---|---|---|
| Cyprodinil (in % w/v) | 30.0 | 25.0 |
| Oleic acid (in % w/v) | 31.0 | 31.0 |
| Castor oil/polyoxyethylene-copolymer(in % w/v) | 6.0 | 6.0 |
| Calcium dodecylbenzenesulfonate (in % w/v) | 4.0 | 4.0 |
| Tristyrenephenole/polyoxyethylene-copolymer (in % w/v) | 2.0 | 2.0 |
| 2-Ethylhexyl acetate | to 1 litre | to 1 litre |

The example was conducted under field conditions using accepted grower practices. The combinations according to the invention were applied to field grown plants. Barley plants, variety Optic, were planted in the field. The combinations according to the invention were applied two times, the first time between Growth Stage 32-33 and the second time between Growth Stage 39-47. Disease severity was assessed as % infected area of the flag leaf 29 days after the second application; in the untreated barley plants 23% of the flag leaf area were infected. Disease control is shown as % disease control compared to untreated barley plants. The plants were harvested at Growth Stage 89 and yields were measured. The untreated barley plants had a yield of 66 dt/ha. Yield increase is shown as % yield increase compared to untreated barley plants.

**Table B-1b: Control of Rhynchosporium on barley**

| Product | Disease control | Yield increase |
|---|---|---|
| "Unix", 500 g ai/ha | 70 % | 17 % |
| "Unix", 300 g ai/ha | 26 % | 7 % |
| A-2A, 300 g ai/ha | 92 % | 26 % |
| A-2B, 300 g ai/ha | 95 % | 19 % |

The results in Table B-1 show that, at an application rate of 300 g cyprodinil/ha, combinations A-2A and A-2B according to the invention are able to control Rhynchosporium on barley plants better than the commonly used "Unix" formulation of cyprodinil. The "Unix" formulations at a rate of 300 and 500 g cyprodinil/ha are able to control Rhynchosporium at a level of 26 and 70%, respectively. In contrast to that, the combinations according to the invention are able to control this disease at a level of 92 to 95%. Furthermore, an improvement in the yield increase compared to untreated plants is seen. Combinations A-2A and A-2B according to the invention are able to increase the yield in the range of 19 to 26%. This is comparable with the "Unix" formulation at a rate of 500 g cyprodinil/ha. In contrast to that, the yield increase for the "Unix" formulation at a rate of 300 g cyprodinil/ha is only 7%, which is far less than achieved with the combinations according to the invention at a rate of 300 g cyprodinil/ha.

A similar experiment was conducted to assess the ability of the combinations according to the invention to control Eyespot on wheat plants better than the commonly used "Unix" formulation at reduced levels of cyprodinil/ha. At 40% of the commonly used amount to control eyespot on wheat, combinations according to the invention were not able to control Eyespot on wheat better than the commonly used "Unix" formulation at 40% of said amount.

## Claims

1. A method of controlling diseases on barley plants caused by phytopathogens, which comprises applying to the barley plants or to the locus of the barley plants a combination of cyprodinil and an unsaturated C₁₈-fatty acid selected from oleic acid, linoleic acid and linolenic acid, wherein the weight ratio of cyprodinil to the unsaturated C₁₈-fatty acid is from 100:1 to 1:100.

2. A method according to claim 1, wherein the unsaturated C₁₈-fatty acid is oleic acid.

3. A method according to claim 1, wherein the combination of cyprodinil and the unsaturated C₁₈-fatty acid is a composition comprising cyprodinil and the unsaturated C₁₈-fatty acid together with at least one formulation adjuvant.

4. A method according to claim 1, wherein the combination of cyprodinil and the unsaturated C₁₈-fatty acid is applied to the barley plants or to the locus of the barley plants at least once between Growth Stage 28 and 65.

5. A method according to claim 1, wherein the combination of cyprodinil and the unsaturated C₁₈-fatty acid is applied to the barley plants or to the locus of the barley plants two tines, once between Growth Stage 28 and 37 and a second time between Growth Stage 38 and 65.

6. A method according to claim 1, wherein the weight ratio of cyprodinil to the unsaturated C₁₈-fatty acid is from 20:80 to 80:20.

7. A method according to claim 1, wherein the application rate of the combination of cyprodinil and the unsaturated C₁₈-fatty acid is from 20 to 4000 g of total combination per hectare.

## Patentansprüche

1. Verfahren zur Bekämpfung von Krankheiten an Gerstenpflanzen, die durch Phytopathogene verursacht werden, bei dem man eine Kombination von Cyprodinil und einer ungesättigten C₁₈-Fettsäure, ausgewählt aus der Reihe Ölsäure, Linolsäure und Linolensäure, auf die Gerstenpflanzen oder den Standort der Gerstenpflanzen appliziert, wobei das Gewichtsverhältnis von Cyprodinil zu der ungesättigten C₁₈-Fettsäure 100:1 bis 1:100 beträgt.

2. Verfahren nach Anspruch 1, wobei es sich bei der ungesättigten C₁₈-Fettsäure um Ölsäure handelt.

3. Verfahren nach Anspruch 1, wobei es sich bei der Kombination von Cyprodinil und der ungesättigten C₁₈-Fettsäure um eine Zusammensetzung handelt, die Cyprodinil und die ungesättigte C₁₈-Fettsäure gemeinsam mit mindestens einem Formulierungshilfsstoff umfasst.

4. Verfahren nach Anspruch 1, wobei die Kombination von Cyprodinil und der ungesättigten C₁₈-Fettsäure mindestens einmal zwischen Wachstumsstadium 28 und 65 auf die Gerstenpflanzen oder den Standort der Gerstenpflanzen appliziert wird.

5. Verfahren nach Anspruch 1, wobei die Kombination von Cyprodinil und der ungesättigten C₁₈-Fettsäure zweimal, einmal zwischen Wachstumsstadium 28 und 37 und ein zweites Mal zwischen Wachstumsstadium 38 und 65, auf die Gerstenpflanzen oder den Standort der Gerstenpflanzen appliziert wird.

6. Verfahren nach Anspruch 1, wobei das Gewichtsverhältnis von Cyprodinil zu der ungesättigten C₁₈-Fettsäure 20:80 bis 80:20 beträgt.

7. Verfahren nach Anspruch 1, wobei die Aufwandmenge der Kombination von Cyprodinil und der ungesättigten C₁₈-Fettsäure 20 bis 4000 g Gesamtkombination pro Hektar beträgt.

## Revendications

1. Méthode de contrôle de maladies chez des plantes d'orge, provoquées par des phytopathogènes, comprenant l'application aux plantes d'orge ou au lieu où les plantes d'orge se développent, d'une combinaison de cyprodinile et d'un acide gras en C₁₈ insaturé choisi parmi l'acide oléique, l'acide linoléique, et l'acide linolénique, où le rapport pondéral du cyprodinile à l'acide gras en C₁₈ insaturé va de 100:1 à 1:100.

2. Méthode selon la revendication 1, dans laquelle l'acide gras en C₁₈ insaturé est l'acide oléique.

3. Méthode selon la revendication 1, dans laquelle la combinaison de cyprodinile et de l'acide gras en C₁₈ insaturé est une composition comprenant le cyprodinile et l'acide gras en C₁₈ insaturé conjointement avec au moins un adjuvant de formulation.

4. Méthode selon la revendication 1, dans laquelle la combinaison de cyprodinile et de l'acide gras en C₁₈ insaturé est appliquée aux plantes d'orge ou au lieu où les plantes d'orge se développent au moins une fois entre la Phase de Développement 28 et 65.

5. Méthode selon la revendication 1, dans laquelle la combinaison de cyprodinile et de l'acide gras en C₁₈ insaturé est appliquée aux plantes d'orge ou au lieu où les plantes d'orge se développent, deux fois, une fois entre la Phase de Développement 28 et 37, et une deuxième fois entre la Phase de Développement 38 et 65.

6. Méthode selon la revendication 1, dans laquelle le rapport pondéral du cyprodinile à l'acide gras en C₁₈ insaturé va de 20:80 à 80:20.

7. Méthode selon la revendication 1, dans laquelle le taux d'application de la combinaison de cyprodinile et d'acide gras en C₁₈ insaturé va de 20 à 4000 g de combinaison totale par hectare.
